# EUROPEAN PATENT APPLICATION

(11) **EP 4 624 758 A1**
(43) Date of publication of application: **01.10.2025**
(21) Application number: 24796480.2
(22) Date of filing: 23.01.2024
(51) Int. Cl.: F04D 29/054, F02C 7/36, F04D 29/28

(54) **ROTARY MACHINE**

(30) Priority: 28.04.2023 JP 2023074564
(71) Applicant: IHI Corporation, Tokyo 135-8710 (JP)
(72) Inventor: AKIYAMA, Masahiro, Tokyo 135-8710 (JP); OHASHI, Satoru, Tokyo 135-8710 (JP); MATSUYAMA, Yoshimitsu, Tokyo 135-8710 (JP)
(74) Representative: TBK
(86) International application number: PCT/JP2024/001920
(87) International publication number: WO 2024/224721

(57) **Abstract**

A rotary machine according to one aspect includes: a rotatable hollow shaft extending in an axial direction; a connected body accommodated in an internal space of the hollow shaft in a state where movement in the axial direction is restricted; a first impeller provided at one end of the hollow shaft and rotating together with the hollow shaft; a second impeller provided at the other end of the hollow shaft and rotating together with the hollow shaft; a first connecting body connecting the first impeller and the connected body; and a second connecting body connecting the second impeller and the connected body.

## Description

### Technical Field

The present disclosure relates to a rotary machine.

### Background Art

Rotary machines such as a supercharger and a compressor are known (see, for example, Patent Literatures 1 to 6 below). For example,

Patent Literature 1 describes an electric supercharger including a turbine shaft, a bearing housing that rotatably supports the turbine shaft, a turbine impeller provided at one end of the turbine shaft, a compressor impeller connected to the other end of the turbine shaft by a shaft end nut, a motor stator fixed to the bearing housing, and a motor rotor fixed to the turbine shaft.

### Citation List

### Patent Literature

Patent Literature 1: International Publication No. 2008/020511 Patent Literature 2: Japanese Unexamined Utility Model Publication No. S59-141442
Patent Literature 3: Japanese Unexamined Utility Model Publication No. H5-055742
Patent Literature 4: Japanese Unexamined Utility Model Publication No. H7-023970
Patent Literature 5: Japanese Unexamined Patent Publication No. H10-201152
Patent Literature 6: Japanese Unexamined Patent Publication No. 2013-15098

### Summary of Invention

### Technical Problem

In order to improve performance of the rotary machine, it is desirable to reduce weight of the rotary machine. On the other hand, a component of the rotary machine has a natural frequency (eigenvalue) determined by a shape and dimension of the component. When a rotation speed of the turbine shaft is close to a dangerous rotation speed determined by the natural frequency of the component, vibration occurs in the rotary machine with rotation of the turbine shaft. In particular, since a rated speed is high in a rotary machine requiring high output such as a supercharger and a compressor, when the natural frequency is low, resonance occurs in the rotary machine, which tends to cause large vibrations. Therefore, the rotary machine is required to be designed in consideration of the natural frequency of each component.

Therefore, an object of the present disclosure is to provide a rotary machine capable of suppressing vibration.

### Solution to Problem

A rotary machine according to one aspect of the present disclosure includes: a rotatable hollow shaft extending in an axial direction; a connected body accommodated in an internal space of the hollow shaft in a state where movement in the axial direction is restricted; a first impeller provided at one end of the hollow shaft and rotating together with the hollow shaft; a second impeller provided at the other end of the hollow shaft and rotating together with the hollow shaft; a first connecting body connecting the first impeller and the connected body; and a second connecting body connecting the second impeller and the connected body.

### Advantageous Effects of Invention

According to various aspects of the present disclosure, vibration of the rotary machine can be suppressed.

### Brief Description of Drawings

FIG. 1 is a diagram schematically illustrating a rotary machine according to an embodiment.
FIG. 2 is a diagram schematically illustrating the rotary machine according to another embodiment.

### Description of Embodiments

A rotary machine according to one aspect of the present disclosure includes: a rotatable hollow shaft extending in an axial direction; a connected body accommodated in an internal space of the hollow shaft in a state where movement in the axial direction is restricted; a first impeller provided at one end of the hollow shaft and rotating together with the hollow shaft; a second impeller provided at the other end of the hollow shaft and rotating together with the hollow shaft; a first connecting body connecting the first impeller and the connected body; and a second connecting body connecting the second impeller and the connected body.

In the present aspect, weight of the rotary machine can be reduced by using the hollow shaft. In addition, since the connected body is accommodated in the internal space of the hollow shaft, the first connecting body connected to the first impeller is connected to the connected body, and the second connecting body connected to the second impeller is connected to the connected body, the first impeller and the second impeller can be connected to each other while suppressing lengths of the first connecting body and the second connecting body. As a result, it is possible to suppress a decrease in natural frequency of the first connecting body and the second connecting body, and a dangerous rotation speed determined by the natural frequency of the first connecting body and the second connecting body is unlikely to match a rotation speed of the rotary machine. Therefore, vibration of the rotary machine can be suppressed.

In one aspect, the first impeller and the second impeller may have bolt holes extending in the axial direction, the first connecting body may include a first bolt inserted into the bolt hole of the first impeller and having one end connected to the connected body and the other end protruding from the bolt hole of the first impeller, and a first nut screwed to the first bolt and fixing the first impeller to the one end of the hollow shaft, and the second connecting body may include a second bolt inserted into the bolt hole of the second impeller and having one end connected to the connected body and the other end protruding from the bolt hole of the second impeller, and a second nut screwed to the second bolt and fixing the second impeller to the other end of the hollow shaft. In the present aspect, since a decrease in natural frequencies of the first bolt and the second bolt is suppressed, the vibration of the rotary machine can be suppressed.

In one aspect, the connected body may include a first portion connected to one end of the first bolt, a second portion connected to one end of the second bolt, and an axial force shaft extending in the axial direction and connecting the first portion and the second portion, and a gap may be formed between the axial force shaft and an inner surface of the hollow shaft. Since the gap is formed between the axial force shaft and the inner surface of the hollow shaft, the weight of the rotary machine can be reduced.

In one aspect, the hollow shaft may include a stopper protruding toward an internal space of the hollow shaft so as to be interposed between the connected body and the first impeller, and the first nut and the second nut may be respectively fastened to the first bolt and the second bolt such that an axial force generated in the first bolt is larger than an axial force generated in the second bolt. By making the axial force generated in the first bolt larger than the axial force generated in the second bolt, the connected body is biased by the stopper, and the movement of the connected body in the axial direction is restricted. Therefore, it is possible to prevent the connected body from falling off.

In one aspect, a length of the axial force shaft in the axial direction may be shorter than lengths of the first bolt and the second bolt. When the axial force shaft is longer, a natural frequency of the axial force shaft decreases, and the vibration is likely to occur in the rotary machine. By making the length of the axial force shaft shorter than the lengths of the first bolt and the second bolt, the vibration of the rotary machine can be suppressed.

In one aspect, the connected body may include a first portion connected to one end of the first bolt and a second portion connected to one end of the second bolt, the first portion and the second portion may be fixed to the hollow shaft, and a gap may be formed between the first portion and the second portion. By fixing the first portion and the second portion of the connected body to the hollow shaft by welding, it is possible to prevent the connected body from falling off from the hollow shaft. Further, since the gap is formed between the first portion and the second portion, the weight of the rotary machine can be reduced.

In one aspect, a distance in the axial direction between a connection point between the first portion and the one end of the first bolt and a connection point between the second portion and the one end of the second bolt may be longer than a length of each of the first bolt and the second bolt. By increasing the distance in the axial direction between the connection point between the first portion and the one end of the first bolt and the connection point between the second portion and the one end of the second bolt, the lengths of the first bolt and the second bolt are reduced. Accordingly, since the decrease in the natural frequencies of the first bolt and the second bolt is suppressed, the vibration of the rotary machine can be suppressed.

Hereinafter, embodiments of the present disclosure will be described with reference to the drawings. Note that in the following description, the same or corresponding elements are denoted by the same reference numerals, and redundant description will not be repeated.

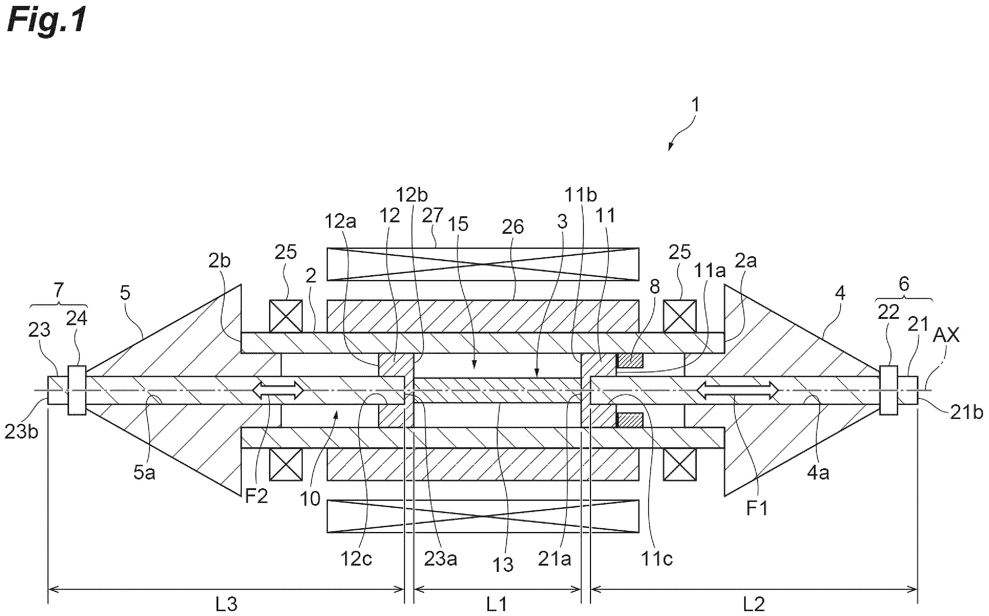

FIG. 1 is a diagram schematically illustrating a rotary machine 1 according to an embodiment. As illustrated in FIG. 1, the rotary machine 1 includes a hollow shaft 2, a connected body 3, a first impeller 4, a second impeller 5, a first connecting body 6, and a second connecting body 7. The rotary machine 1 is, for example, a two-stage compressor in which a gas compressed by the first impeller 4 is further compressed by the second impeller 5.

The hollow shaft 2 is a hollow rotating shaft having an internal space 10, and extends in a direction along an axis AX (hereinafter referred to as an "axial direction"). The hollow shaft 2 is made of metal such as stainless steel and has a cylindrical shape. The hollow shaft 2 is rotatably supported around the axis AX by a pair of bearings 25. The pair of bearings 25 are respectively provided between the first impeller 4 and a rotor 26 to be described later, and between the second impeller 5 and the rotor 26.

The hollow shaft 2 has a stopper 8 protruding toward the internal space 10 of the hollow shaft 2. An inner diameter of the hollow shaft 2 is narrower at a position where the stopper 8 is formed than at a position where the stopper 8 is not formed. The stopper 8 is disposed to be interposed between the connected body 3 and the first impeller 4, and restricts the movement of the connected body 3 in the axial direction.

The connected body 3 is accommodated in the internal space 10 of the hollow shaft 2. Specifically, the connected body 3 is detachably provided between the stopper 8 of the hollow shaft 2 and the second impeller 5. The connected body 3 may be made of the same material as the hollow shaft 2, or may be made of a material different from the hollow shaft 2. For example, the connected body 3 is made of metal such as stainless steel or titanium.

The connected body 3 includes a first portion 11, a second portion 12, and an axial force shaft 13. The first portion 11 and the second portion 12 have a substantially columnar shape with the axis AX as a central axis, and are provided separately from each other in the axial direction in the internal space 10 of the hollow shaft 2. The first portion 11 is disposed closer to the first impeller 4 than the second portion 12. Outer diameters of the first portion 11 and the second portion 12 substantially match the inner diameter of the hollow shaft 2 at the position where the stopper 8 is not formed. Therefore, outer peripheral surfaces of the first portion 11 and the second portion 12 are in contact with an inner peripheral surface of the hollow shaft 2. On the other hand, an inner diameter of the stopper 8 is smaller than the outer diameters of the first portion 11 and the second portion 12. Therefore, when the connected body 3 slides toward the first impeller 4, the connected body 3 comes into contact with the stopper 8, and movement toward the first impeller 4 is restricted.

The first portion 11 has a first side surface 11a facing the first impeller 4 side and a second side surface 11b facing the second impeller 5 side. A female screw hole 11c is formed in the first side surface 11a of the first portion 11. The second portion 12 has a first side surface 12a facing the second impeller 5 side and a second side surface 12b facing the first impeller 4 side. A female screw hole 12c is formed in the first side surface 12a of the second portion 12.

The axial force shaft 13 extends in the axial direction and connects the first portion 11 and the second portion 12. That is, one end of the axial force shaft 13 is connected to the second side surface 11b of the first portion 11, and the other end of the axial force shaft 13 is connected to the second side surface 12b of the second portion 12. The axial force shaft 13 has a function of transmitting the axial force between the first connecting body 6 and the second connecting body 7. A diameter of the axial force shaft 13 is smaller than the inner diameter of the hollow shaft 2. Therefore, a gap 15 is formed between an outer peripheral surface of the axial force shaft 13 and the inner peripheral surface (inner surface) of the hollow shaft 2. By forming the gap 15, the weight of the rotary machine 1 is reduced. Note that the first portion 11, the second portion 12, and the axial force shaft 13 may be integrally formed.

The first impeller 4 is provided at one end 2a of the hollow shaft 2. The first impeller 4 is, for example, a compressor impeller having blades for compressing gas. As illustrated in FIG. 1, a back surface of the first impeller 4 is in contact with the one end 2a of the hollow shaft 2. A part of the first impeller 4 may be inserted into the internal space 10 of the hollow shaft 2. A bolt hole 4a extending in the axial direction is formed in the first impeller 4 so as to penetrate the first impeller 4.

The second impeller 5 is provided at the other end 2b of the hollow shaft 2. The second impeller 5 is, for example, a compressor impeller having blades for compressing gas. For example, the gas compressed by the first impeller 4 is supplied to the second impeller 5 through a flow path (not illustrated), and is further compressed by the second impeller 5. As illustrated in FIG. 1, a back surface of the second impeller 5 is in contact with the other end 2b of the hollow shaft 2. A part of the second impeller 5 may be inserted into the internal space 10 of the hollow shaft 2. A bolt hole 5a extending in the axial direction is formed in the second impeller 5 so as to penetrate the second impeller 5.

The first connecting body 6 connects the first impeller 4 and the connected body 3. The first connecting body 6 includes a first bolt 21 and a first nut 22. The first bolt 21 is inserted through the bolt hole 4a of the first impeller 4 and extends in the axial direction. One end 21a of the first bolt 21 is fastened to a female screw hole 11c formed in the first portion 11 of the connected body 3 in the internal space 10 of the hollow shaft 2. The other end 21b of the first bolt 21 protrudes in the axial direction from the bolt hole 4a of the first impeller 4. The first nut 22 is screwed to the first bolt 21 from the other end 21b side. By fastening the first nut 22, the first impeller 4 is fixed to the one end 2a of the hollow shaft 2.

The second connecting body 7 connects the second impeller 5 and the connected body 3. The second connecting body 7 includes a second bolt 23 and a second nut 24. The second bolt 23 is inserted through the bolt hole 5a of the second impeller 5 and extends in the axial direction. One end 23a of the second bolt 23 is fastened to a female screw hole 12c formed in the second portion 12 of the connected body 3 in the internal space 10 of the hollow shaft 2. The other end 23b of the second bolt 23 protrudes in the axial direction from the bolt hole 5a of the second impeller 5. The second nut 24 is screwed to the second bolt 23 from the other end 23b side. By fastening the second nut 24, the second impeller 5 is fixed to the other end 2b of the hollow shaft 2. As described later, the first nut 22 and the second nut 24 are respectively fastened to the first bolt 21 and the second bolt 23 such that an axial force F1 generated in the first bolt 21 is larger than an axial force F2 generated in the second bolt 23.

As described above, the axial force shaft 13 connects the first portion 11 and the second portion 12. Here, a length L1 of the axial force shaft 13 in the axial direction may be shorter than a length L2 of the first bolt 21 and a length L3 of the second bolt 23. When the axial force shaft 13 is excessively long, the natural frequency of the axial force shaft 13 decreases, which may cause the vibration. By making the length L1 of the axial force shaft 13 shorter than the length L2 of the first bolt 21 and the length L3 of the second bolt 23, it is possible to suppress a decrease in the natural frequency of the axial force shaft 13 and suppress the vibration of the rotary machine 1.

The rotary machine 1 further includes the rotor 26 and a stator 27. The rotor 26 is disposed between the pair of bearings 25 and is fixed to an outer peripheral surface of the hollow shaft 2. The rotor 26 includes one or a plurality of permanent magnets. The stator 27 is disposed to surround the rotor 26 from an outside in a radial direction, and is fixed to a housing (not illustrated). The stator 27 includes a coil that generates a magnetic field and a stator core around which the coil is wound. When power is supplied to the coil of the stator 27, a force rotating about the axis AX acts on the rotor 26 by interaction between the magnetic field generated by the coil and magnetic field of the rotor 26. The force acting on the rotor 26 is transmitted to the hollow shaft 2 to rotate the hollow shaft 2 about the axis AX. That is, the rotor 26 and the stator 27 function as a motor that applies a rotational force to the hollow shaft 2.

As the hollow shaft 2 rotates about the axis AX, the first impeller 4 and the second impeller 5 rotate together with the hollow shaft 2. When the first impeller 4 and the second impeller 5 rotate, the gas supplied to the first impeller 4 is compressed, and the gas compressed by the first impeller 4 is further compressed by the second impeller 5.

Hereinafter, a method for assembling the rotary machine 1 will be described with reference to FIG. 1. When assembling the rotary machine 1, first, the connected body 3 is press-fitted into the internal space 10 from the other end 2b side of the hollow shaft 2, and the first side surface 11a of the first portion 11 is brought into contact with the stopper 8. Next, the first impeller 4 is fixed to the one end 2a of the hollow shaft 2 using the first connecting body 6. Specifically, the first bolt 21 is inserted into the bolt hole 4a of the first impeller 4, and the one end 21a of the first bolt 21 is fastened to the female screw hole 11c formed in the first portion 11 of the connected body 3. Next, the first nut 22 is screwed to the other end 21b of the first bolt 21 protruding from the bolt hole 4a, and the first nut 22 is tightened to fix the first impeller 4 to the one end 2a of the hollow shaft 2. At this time, a tightening torque of the first nut 22 is adjusted so that the axial force F1 is generated in the first bolt 21. The axial force means stress generated in a length direction of the bolt by fastening the nut.

Next, the second impeller 5 is fixed to the other end 2b of the hollow shaft 2 using the second connecting body 7. Specifically, the second bolt 23 is inserted into the bolt hole 5a of the second impeller 5, and the one end 23a of the second bolt 23 is fastened to the female screw hole 12c formed in the second portion 12 of the connected body 3. Next, the second nut 24 is screwed to the other end 23b of the second bolt 23 protruding from the bolt hole 5a, and the second nut 24 is tightened to fix the second impeller 5 to the other end 2b of the hollow shaft 2. At this time, a tightening torque of the second nut 24 is adjusted so that the axial force F2 is generated in the second bolt 23.

Here, the first nut 22 and the second nut 24 are respectively fastened to the first bolt 21 and the second bolt 23 such that the axial force F1 generated in the first bolt 21 is larger than the axial force F2 generated in the second bolt 23. That is, the tightening torque of the first nut 22 to the first bolt 21 is larger than the tightening torque of the second nut 24 to the second bolt 23. By making the axial force F1 larger than the axial force F2, a force for attracting the connected body 3 to the first impeller 4 acts on the connected body 3, and the connected body 3 is biased against the stopper 8. Therefore, when the second nut 24 is fastened to the second bolt 23, the connected body 3 is prevented from moving toward the other end 2b of the hollow shaft 2 by the axial force F2 and falling off from the hollow shaft 2. That is, the movement of the connected body 3 in the axial direction is restricted.

As described above, in the rotary machine 1, the weight of the rotary machine 1 can be reduced by using the hollow shaft 2 having the internal space 10. On the other hand, when the first impeller 4 and the second impeller 5 are attached to the hollow shaft 2, how to fix the first impeller 4 and the second impeller 5 to the hollow shaft 2 is a problem. For example, it is conceivable to connect the first impeller 4 and the second impeller 5 with one bolt, but in this case, the bolt inevitably becomes long, and thus the natural frequency of the bolt decreases. Accordingly, the dangerous rotation speed determined by the natural frequency of the bolt approaches a rotation speed of the hollow shaft 2, which may cause the vibration in the rotary machine 1 during rotation of the hollow shaft 2.

On the other hand, in the rotary machine 1, the connected body 3 and the first impeller 4 are connected using the first bolt 21, and the connected body 3 and the second impeller 5 are connected using the second bolt 23. That is, the first impeller 4 and the second impeller 5 are fastened to the connected body 3 using separate bolts. Thus, the first impeller 4 and the second impeller 5 can be fixed to the hollow shaft 2 using relatively short bolts as compared with a case where the first impeller 4 and the second impeller 5 are connected by one bolt. Therefore, the dangerous rotation speed determined by the natural frequencies of the first bolt 21 and the second bolt 23 is unlikely to match the rotation speed of the hollow shaft 2. As a result, the vibration of the rotary machine 1 can be suppressed.

Further, in the rotary machine 1, since the length L1 of the axial force shaft 13 is shorter than the length L2 of the first bolt 21 and the length L3 of the second bolt 23, it is possible to suppress the decrease in the natural frequency of the axial force shaft 13. Therefore, the dangerous rotation speed determined by the natural frequency of the axial force shaft 13 is unlikely to match the rotation speed of the hollow shaft 2, and as a result, the vibration of the rotary machine 1 can be suppressed.

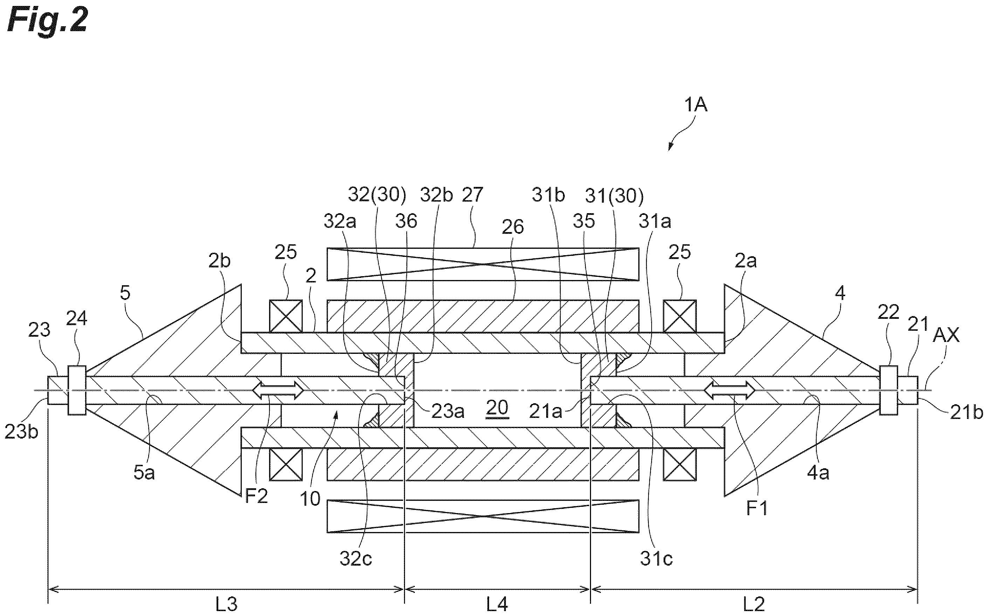

Next, the rotary machine according to another embodiment will be described. FIG. 2 is a diagram schematically illustrating a rotary machine 1A according to another embodiment. In the following description, differences from the rotary machine 1 described above will be mainly described, and redundant description will be omitted.

As illustrated in FIG. 2, the hollow shaft 2 of the rotary machine 1A is different from the hollow shaft 2 of the rotary machine 1 illustrated in FIG. 1 in that the hollow shaft 2 does not include the stopper 8. Therefore, the hollow shaft 2 of the rotary machine 1A has a constant inner diameter in an entire region in the axial direction. In addition, the rotary machine 1A includes a connected body 30 instead of the connected body 3. The connected body 30 includes a first portion 31 and a second portion 32. The first portion 31 and the second portion 32 have a substantially cylindrical shape with the axis AX as a central axis, and are provided separately from each other in the axial direction in the internal space 10 of the hollow shaft 2.

The first portion 31 is disposed closer to the first impeller 4 than the second portion 32. Outer diameters of the first portion 31 and the second portion 32 substantially match the inner diameter of the hollow shaft 2. Therefore, outer peripheral surfaces of the first portion 31 and the second portion 32 are in contact with the inner peripheral surface of the hollow shaft 2. A gap 20 is formed between the first portion 31 and the second portion 32. The gap 20 is formed in an entire region between the first portion 31 and the second portion 32. By forming the gap 20, the weight of the rotary machine 1A is further reduced. Unlike the connected body 3, the connected body 30 does not include the axial force shaft 13, and the first portion 31 and the second portion 32 are not connected to each other. Instead, each of the first portion 11 and the second portion 12 is fixed to the hollow shaft 2 by welding. Thus, the movement of the connected body 30 in the axial direction is restricted.

The first portion 31 has a first side surface 31a facing the first impeller 4 side and a second side surface 31b facing the second impeller 5 side. A female screw hole 31c is formed in the first side surface 31a of the first portion 11. The second portion 32 has a first side surface 32a facing the second impeller 5 side and a second side surface 32b facing the first impeller 4 side. A female screw hole 32c is formed in the first side surface 32a of the second portion 12. The one end 21a of the first bolt 21 is fastened to the female screw hole 31c of the first portion 11. The one end 23a of the second bolt 23 is fastened to the female screw hole 32c. The first nut 22 and the second nut 24 may be respectively fastened to the first bolt 21 and the second bolt 23 such that the axial force F1 generated in the first bolt 21 is equal to the axial force F2 generated in the second bolt 23.

In FIG. 2, a distance L4 in the axial direction between a connection point 35 between the first portion 31 of the connected body 30 and the one end 21a of the first bolt 21 and a connection point 36 between the second portion 32 of the connected body 30 and the one end 23a of the second bolt 23 is shorter than the length L2 of the first bolt 21 and the length L3 of the second bolt 23. However, in one embodiment, the distance L4 between the connection point 35 and the connection point 36 may be longer than the length L2 of the first bolt 21 and the length L3 of the second bolt 23. By increasing the distance L4 between the connection point 35 and the connection point 36, the length L2 of the first bolt 21 and the length L3 of the second bolt 23 are shortened. As a result, it is possible to suppress a decrease in the natural frequencies of the first bolt 21 and the second bolt 23, and as a result, it is possible to suppress the vibration of the rotary machine 1A due to resonance.

Similarly to the rotary machine 1, in the rotary machine 1A, the weight of the rotary machine 1 can be reduced by using the hollow shaft 2 having the internal space 10. In addition, since the first impeller 4 and the second impeller 5 are fastened to the connected body 3 using the first bolt 21 and the second bolt 23, the first impeller 4 and the second impeller 5 can be fixed to the hollow shaft 2 with relatively short bolts as compared with a case where the first impeller 4 and the second impeller 5 are connected by one bolt. Therefore, the dangerous rotational speed determined by the natural frequencies of the first bolt 21 and the second bolt 23 is unlikely to match the rotation speed of the hollow shaft 2, and the vibration of the rotary machine 1 can be suppressed. Furthermore, in the rotary machine 1A, the weight of the rotary machine 1A can be further reduced by an amount that the axial force shaft 13 is not provided.

Although the rotary machines according to various embodiments have been described above, the present disclosure is not limited to the above-described embodiments, and various modifications can be made without changing the gist of the disclosure. That is, it should be noted that the above-described embodiments are for the purpose of illustration and are not intended to limit the scope of the present disclosure.

For example, in the above-described embodiments, examples in which the rotary machines 1 and 1A are used as two-stage compressors have been described, but the rotary machines 1 and 1A may be used as superchargers applied to internal combustion engines of ships or vehicles. When the rotary machine is used as the supercharger, the first impeller 4 rotates by flow of exhaust gas discharged from the internal combustion engine. The second impeller 5 rotates with rotation of the first impeller 4, compresses air taken, and supplies the compressed air to the internal combustion engine. Further, the rotary machines 1 and 1A may be electric turbochargers that supply the compressed air to a fuel cell.

### Reference Signs List

- 1, 1A: rotary machine

- 2: hollow shaft
- 2a: one end of hollow shaft
- 2b: other end of hollow shaft
- 3, 30: connected body
- 4: first impeller
- 5: second impeller
- 4a, 5a: bolt hole
- 6: first connecting body
- 7: second connecting body
- 8: stopper
- 10: internal space
- 11, 31: first portion
- 12, 32: second portion
- 13: axial force shaft
- 15, 20: gap
- 21: first bolt
- 21a: one end of first bolt
- 21b: other end of first bolt
- 22: first nut
- 23: second bolt
- 23a: one end of second bolt
- 23b: other end of second bolt
- 24: second nut
- 35, 36: connection point
- F1, F2: axial force

## Claims

1. A rotary machine comprising:
a rotatable hollow shaft extending in an axial direction;
a connected body accommodated in an internal space of the hollow shaft in a state where movement in the axial direction is restricted;
a first impeller provided at one end of the hollow shaft and rotating together with the hollow shaft;
a second impeller provided at the other end of the hollow shaft and rotating together with the hollow shaft;
a first connecting body connecting the first impeller and the connected body; and
a second connecting body connecting the second impeller and the connected body.

2. The rotary machine according to claim 1, wherein
the first impeller and the second impeller have bolt holes extending in the axial direction,
the first connecting body includes a first bolt inserted into the bolt hole of the first impeller and having one end connected to the connected body and the other end protruding from the bolt hole of the first impeller, and a first nut screwed to the first bolt and fixing the first impeller to the one end of the hollow shaft, and
the second connecting body includes a second bolt inserted into the bolt hole of the second impeller and having one end connected to the connected body and the other end protruding from the bolt hole of the second impeller, and a second nut screwed to the second bolt and fixing the second impeller to the other end of the hollow shaft.

3. The rotary machine according to claim 2, wherein
the connected body includes a first portion connected to one end of the first bolt, a second portion connected to one end of the second bolt, and an axial force shaft extending in the axial direction and connecting the first portion and the second portion, and
a gap is formed between the axial force shaft and an inner surface of the hollow shaft.

4. The rotary machine according to claim 3, wherein
the hollow shaft includes a stopper protruding toward an internal space of the hollow shaft so as to be interposed between the connected body and the first impeller, and
the first nut and the second nut are respectively fastened to the first bolt and the second bolt such that an axial force generated in the first bolt is larger than an axial force generated in the second bolt.

5. The rotary machine according to claim 3 or 4, wherein a length of the axial force shaft in the axial direction is shorter than lengths of the first bolt and the second bolt.

6. The rotary machine according to claim 2, wherein
the connected body includes a first portion connected to one end of the first bolt and a second portion connected to one end of the second bolt,
the first portion and the second portion are fixed to the hollow shaft, and
a gap is formed between the first portion and the second portion.

7. The rotary machine according to claim 6, wherein a distance in the axial direction between a connection point between the first portion and the one end of the first bolt and a connection point between the second portion and the one end of the second bolt is longer than a length of each of the first bolt and the second bolt.
